# EUROPEAN PATENT APPLICATION

(11) **EP 4 090 106 A1**
(43) Date of publication of application: **16.11.2022**
(21) Application number: 20912347.0
(22) Date of filing: 10.01.2020
(51) Int. Cl.: H04W 72/04, H04W 72/12

(54) **TERMINAL AND COMMUNICATION METHOD**

(71) Applicant: NTT DOCOMO, INC., Chiyoda-Ku Tokyo 100-6150 (JP)
(72) Inventor: HARADA, Hiroki, Tokyo 100-6150 (JP); NAGATA, Satoshi, Tokyo 100-6150 (JP); WANG, Lihui, Beijing, 100190 (CN)
(74) Representative: Hoffmann Eitle
(86) International application number: PCT/JP2020/000765
(87) International publication number: WO 2021/140671

(57) **Abstract**

A terminal includes a receiving unit that receives, through a first component carrier of a plurality of component carriers forming carrier aggregation, scheduling information for one or more second component carriers of the plurality of component carriers; and a control unit that configures, based on information for requesting sounding reference signal (SRS) transmission included in the scheduling information, SRS transmission on the one or more second component carriers.

## Description

### TECHNICAL FIELD

The present invention relates to a terminal and a communication method in a radio communication system.

### BACKGROUND ART

New Radio (NR) Dynamic spectrum sharing (DSS) is a method of using Long Term Evolution (LTE) and NR in a same carrier. In the LTE system, Cell Specific Reference Signal (CRS), Physical Downlink Control Channel (PDCCH), or the like are transmitted for an LTE user. Accordingly, in DSS, PDCCH and data of NR are transmitted while avoiding a time resource for transmitting a signal for an LTE user.

For 3GPP Release 17, a DSS enhancement has been studied. As specific details of the DSS enhancement, for example, it has been studied to perform cross-carrier scheduling of Physical Downlink Shared Channel (PDSCH) or Physical Uplink Shared Channel (PUSCH) of a PCell (or Primary Secondary Cell (PSCell)) by Physical Downlink Control Channel (PDCCH) of a secondary cell (SCell) in CA. Furthermore, it has been studied, for a PDCCH of P(S)Cell/SCell, to perform scheduling of PDSCHs of a plurality of cells using a single Downlink Control Information (DCI).

### Related Art Document

### [Non-Patent Document]

Non-Patent Document 1: 3GPP TSG RAN Meeting #86,RP-193260, Sitges, Spain, December 9-12, 2019
Non-Patent Document 2: 3GPP TS38.213 V15.7.0(2019-09)
Non-Patent Document 3: 3GPP TS38.214 V15.7.0(2019-09)

### SUMMARY OF THE INVENTION

### [PROBLEM TO BE SOLVED BY THE INVENTION]

It has been studied to minimize a size of a single DCI used for scheduling of a plurality of cells. However, by including an SRS request field in DCI, aperiodic SRS transmission can be triggered in a scheduled cell.

There is a need for a method of efficiently triggering aperiodic SRS transmission in a scheduled cell when a plurality of cells is scheduled.

### [MEANS FOR SOLVING THE PROBLEM]

According to an aspect of the present invention, there is provided a terminal including a receiving unit that receives, through a first component carrier of a plurality of component carriers forming carrier aggregation, scheduling information for one or more second component carriers of the plurality of component carriers; and a control unit that configures, based on information for requesting sounding reference signal (SRS) transmission included in the scheduling information, SRS transmission on the one or more second component carriers.

### [ADVANTAGE OF THE INVENTION]

According to an embodiment, a method is provided that is for efficiently triggering aperiodic SRS transmission in a scheduled cell when a plurality of cells is scheduled.

### BRIEF DESCRIPTION OF DRAWINGS

FIG. 1 is a configuration diagram of a communication system according to embodiments.
FIG. 2 is a diagram illustrating an example of a scheduling of a plurality of cells.
FIG. 3 is a diagram illustrating an example of a correspondence between a bit value of a BWP indicator field and a combination of BWPs to be activated for respective CCs.
FIG. 4 is a diagram illustrating an example of joint coding between CIF and a BWP indication field.
FIG. 5 is a diagram illustrating an example of a functional configuration of a terminal.
FIG. 6 is a diagram illustrating an example of a functional configuration of a base station.
FIG. 7 is a diagram illustrating an example of a hardware configuration of each of a terminal and a base station.

### [EMBODIMENTS OF THE INVENTION]

In the following, embodiments of the present invention are described with reference to the drawings. Note that the embodiments described below are merely examples, and embodiments to which the present invention is applied are not limited to the following embodiments.

A radio communication system in the following embodiments is assumed, basically, to conform to NR. However, this is an example, and a portion of the radio communication system or all the radio communication system according to the embodiments may conform to a radio communication system (e.g., LTE) other than NR.

### (Overall System Configuration)

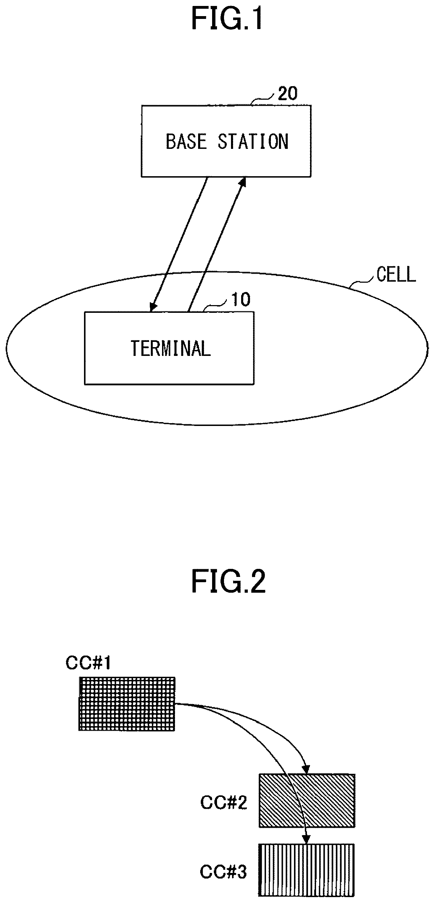

FIG. 1 illustrates a configuration diagram of a radio communication system according to an embodiment. The radio communication system according to the embodiment includes a terminal 10 and a base station 20, as illustrated in FIG. 1. In FIG. 1, one terminal 10 and one base station 20 are illustrated. However, this is an example, and there may be a plurality of terminals 10 and a plurality of base stations 20.

The terminal 10 is a communication device provided with a radio communication function, such as a smartphone, a cellular phone, a tablet, a wearable terminal, and a communication module for Machine-to-Machine (M2M). The terminal 10 utilizes various communication services provided by a radio communication system by receiving a control signal or data in DL from the base station 20 and transmitting a control signal or data in UL to the base station 20. For example, channels transmitted from terminal 10 include Physical Uplink Control Channel (PUCCH) and Physical Uplink Shared Channel (PUSCH). Furthermore, the terminal 10 may be referred to as a UE, and the base station 20 may be referred to as a gNB.

In the embodiments, a duplex method may be a Time Division Duplex (TDD) method or a Frequency Division Duplex (FDD) method.

In the embodiments, "configuring" a radio parameter or the like may imply that a predetermined value is pre-configured or the radio parameter or the like is configured based on a radio parameter notified by the base station 20 or the terminal 10.

The base station 20 is a communication device that provides one or more cells and performs radio communication with the terminal 10. Physical resources of a radio signal may be defined in a time domain and a frequency domain, the time domain may be defined in OFDM symbols, and the frequency domain may be defined in a number of one or more subcarriers or a number of one or more resource blocks. The base station 20 transmits a synchronization signal and system information to the terminal 10. A synchronization signal is, for example, NR-PSS and NR-SSS. A part of system information is transmitted, for example, on NR-PBCH and is also called broadcast information. The synchronization signal and broadcast information may be periodically transmitted as an SS block (SS/PBCH block) including a predetermined number of OFDM symbols. For example, the base station 20 transmits a control signal or data to the terminal 10 in Downlink (DL) and receives a control signal or data in Uplink (UL) from the terminal 10. The base station 20 and the terminal 10 are capable of beam forming to transmit and receive signals. For example, as illustrated in FIG. 1, a reference signal transmitted from the base station 20 includes a Channel State Information Reference Signal (CSI-RS) and a channel transmitted from the base station 20 includes a Physical Downlink Control Channel (PDCCH) and a Physical Downlink Shared Channel (PDSCH) .

### (NR Dynamic spectrum sharing(DSS))

New Radio (NR) Dynamic spectrum sharing (DSS) is a method of using Long Term Evolution (LTE) and NR in a same carrier. In LTE system, Cell Specific Reference Signal (CRS), Physical Downlink Control Channel (PDCCH), and the like are transmitted for an LTE user. Accordingly, in DSS, PDCCH and data of NR are transmitted while avoiding a time resource for transmitting a signal to an LTE user.

For DSS, methods have been introduced so far, such as a method of introducing signaling for rate matching an LTE CRS resource, and a method of shifting a location of an NR DMRS so as to avoid a collision between the NR Demodulation Reference Signal (DMRS) and an LTE CRS.

Since a carrier to which DSS is applied is a carrier used in the LTE system, the carrier is on a lower frequency, such as 800 MHz and 2 GHz, compared to a normal NR carrier. As described above, since a carrier to which DSS is applied is the carrier used in the LTE system, at the NR system side, an NR control signal is mapped onto a carrier while avoiding a control signal, CRS, or the like of LTE. Accordingly, for a carrier to which DSS is applied, it is assumed that capacity for transmitting NR control signals is reduced compared to capacity for transmitting NR control signals in a normal NR carrier.

Here, it is assumed that a carrier aggregation (CA) including a carrier to which DSS is applied is performed in the NR system. As described above, a carrier to which DSS is applied is a carrier on a lower frequency compared to a normal NR carrier. Accordingly, it is assumed that carrier aggregation (CA) is performed while using a carrier to which DSS is applied as a primary cell (PCell). However, as described above, it is expected that, for a carrier to which DSS is applied, capacity for transmitting NR control signals is reduced compared to capacity for transmitting NR control signals in a normal NR carrier. Accordingly, in this case, the capacity for transmitting the NR control signals of the carrier to which DSS is applied may be insufficient as that of a PCell.

Accordingly, in 3GPP Release 17, enhancement of DSS has been studied. A frequency range (FR) may be assumed to be limited to FR1 of the combination of Frequency Range (FR) 1 and FR2, for example.

As specific details of the DSS enhancement, for example, it has been studied to perform cross-carrier scheduling of a Physical Downlink Shared Channel (PDSCH) or a Physical Uplink Shared Channel (PUSCH) of a PCell (or primary second cell (PSCell)) by a Physical Downlink Control Channel (PDCCH) of a secondary cell (SCell) in CA. Furthermore, for PDCCH of a P(S)Cell/SCell, it has been studied to perform scheduling of PDSCHs of a plurality of cells using single Downlink Control Information (DCI). A number of cells for scheduling using a single DCI may be, for example, two, or greater than two.

It has been studied to minimize the size of a single DCI used for scheduling of PDSCHs in a plurality of cells. For example, an upper limit may be defined on the size of the single DCI used for scheduling of PDSCHs in the plurality of cells. Although the above-described example assumes scheduling of PDSCHs in a plurality of cells by the single DCI, the number of DCIs is not limited to this example, and the number of DCIs may be greater than or equal to two, for example. Furthermore, scheduling of a plurality of cells may be, for example, when CA including component carriers (CC)#1, CC#2, and CC#3 is performed, as illustrated in FIG. 2, to perform scheduling of PUSCH transmission and/or PDSCH reception in the terminal 10 through the CC#2, and/or to perform scheduling of PUSCH transmission and/or PDSCH reception in the terminal 10 through the CC#3 by the DCI transmitted from the base station 20 to the terminal 10 through the CC#1. In the example of FIG. 2, three component carriers are illustrated, but the number of component carriers is not limited to three. For example, a number of component carriers may be 2, or a number of component carriers may be greater than 3.

### (DCI format 1_1/0_1)

DCI is transmitted through PDCCH. A DCI format 1_1 can be used to perform downlink scheduling (Downlink scheduling assignment) or uplink scheduling (uplink grant) of the terminal 10. The DCI format 1_1 may include, for example, an identifier of the DCI format, resource information, information related to a transport block, information related to Hybrid Automatic Repeat Request (HARQ), information related to multiple antennas, information related to Physical Uplink Control Channel (PUCCH), or the like.

For example, the DCI format 1_1 may include a Carrier indicator, a Bandwidth-part indicator, Frequency-domain resource allocation, Time-domain resource allocation, VRB-to-PRB mapping, PRB size indicator, Reserved resources, Zero-power CSI-RS trigger, or the like, as resource information.

Furthermore, for example, an SRS request, etc., used for requesting sounding reference signal transmission may be included in DCI format 1_1, as information related to multiple antennas.

The inclusion of the Carrier Indicator field (CIF) in DCI format 1_1 indicates that cross-carrier scheduling is configured. A number of bits of the Carrier indicator included in the CIF is 0 bit or 3 bits and is used to indicate a component carrier related to DCI.

The DCI format 0_1 may be used to perform uplink scheduling (uplink scheduling assignment) of the terminal 10. The DCI format 0_1 may include, for example, an identifier of the DCI format, resource information, information related to the transport block, information related to the HARQ, information related to the multi-antenna, information related to the power control, etc.

The DCI format 0_1 can include, for example, a Carrier indicator, a UL/SUL indicator, a Bandwidth-part indicator, Frequency-domain resource allocation, Time-domain resource allocation, a Frequency-hopping flag, or the like, as resource information.

Furthermore, for example, an SRS request used for requesting sounding reference signal transmission may be included in DCI format 0_1, as information related to multiple antennas.

The inclusion of CIF in the DCI format 0_1 indicates that cross-carrier scheduling is configured. A number of bits of the Carrier indicator included in the CIF is 0 bit or 3 bits and is used to indicate the component carrier related to the DCI.

### (Aperiodic SRS transmission)

The size of the above-described SRS request field included in DCI format 1_1(0_1) may be 2 bits (if SUL is not configured) or 3bits (if SUL is configured) depending on whether a Supplementary Uplink (SUL) is configured.

For example, during scheduling, while the base station 20 performs downlink scheduling or uplink scheduling, the base station 20 can trigger aperiodic SRS transmission to the terminal 10 by using the SRS request field.

In the following, a specific configuration of the SRS request field is considered when scheduling is performed for a plurality of cells. For example, for a plurality of cells scheduled by the base station 20, it may be defined whether aperiodic SRS transmission is triggered by the SRS request field and it may be defined how to trigger aperiodic SRS transmission by the SRS request field. Additionally or alternatively, for one cell of a plurality of cells scheduled by the base station 20, it may be defined whether aperiodic SRS transmission is triggered by the SRS request field and it may be defined how to trigger aperiodic SRS transmission by the SRS request field. Note that, in the embodiment described below, the number of CCs scheduled by a single DCI is 2, but the number of CCs scheduled by a single DCI is not limited to 2. A number of CCs scheduled by a single DCI may be, for example, 1 or a number of CCs scheduled by a single DCI may be greater than 2.

### (Proposal 1)

If the base station 20 schedules multiple cells, it may be possible to request SRS transmission for each scheduled cell. If the base station 20 schedules multiple cells, aperiodic SRS transmission may be triggered for each cell of the multiple cells by the SRS request field. The terminal 10 may perform aperiodic SRS transmission based on a value set in the SRS request field on each cell of the multiple cells.

### (Proposal 1-1)

If the base station 20 schedules multiple cells, the SRS request field may be extended to X bits, for example. Here, X may be {2 or 3} + {2 or 3} based on whether SUL is configured on each scheduled cell. That is, X may be, for example, a sum of numbers of bits required to trigger aperiodic SRS transmission on each cell of the plurality of cells. Note that X may be determined based on the number of scheduled cells.

For example, in the example illustrated in FIG. 2, suppose that transmissions of PDSCHs (or transmissions of PUSCHs) on CC#2 and CC#3 are scheduled for the terminal 10 by DCI transmitted from the base station 20 through PDCCH on CC#1. Furthermore, suppose that SUL is not configured on CC#2 and SUL is configured on CC#3. In this case, the SRS request field in the DCI may include a total of five bits, which are two bits for triggering aperiodic SRS transmission on CC#2 and three bits for triggering aperiodic SRS transmission on CC#3. The terminal 10 receiving the DCI through the PDCCH of CC#1 may perform aperiodic SRS transmission on CC#2 based on the value of the two bits for triggering aperiodic SRS transmission on CC#2 included in the SRS request field and may perform aperiodic SRS transmission on CC#3 based on the value of the three bits for triggering aperiodic SRS transmission on CC#3 included in the SRS request field.

### (Proposal 1-2)

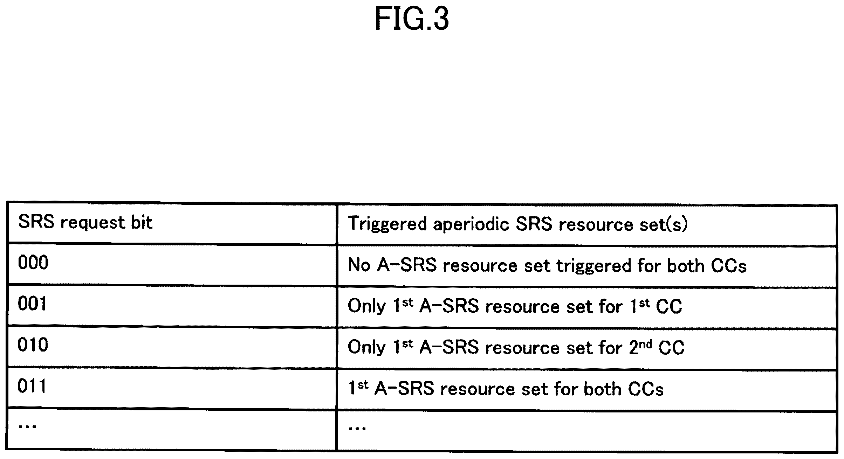

If the base station 20 schedules multiple cells, for example, the SRS request field may be extended to Y bits. For example, the value of Y may be preconfigured, and the base station 20 may transmit the value of Y by RRC signaling. Here, as illustrated in FIG. 3 Y may be, for example, a number that is required for specifying a combination of an aperiodic SRS resource set that can be selected for a first CC and a periodic SRS resource set that can be selected for a second CC (which may include a case in which no aperiodic SRS resource set is selected for the first CC and/or no aperiodic SRS resource set is selected for the second CC). In this case a correspondence may be defined between a bit value of the SRS request field and aperiodic SRS resource sets selected for respective CCs, so that, by specifying a bit value in the SRS request field, the aperiodic SRS resource set selected for the first CC is specified and the aperiodic SRS resource set selected for the second CC is specified. For example, the correspondence may be predefined by a specification or may be configured by a higher layer. For example, as illustrated in FIG. 3, when the value of the SRS request bits set in the SRS request field in the DCI transmitted from the base station 20 is "000," the terminal 10 may assume that aperiodic SRS transmission is not triggered for each cell of the plurality of cells. For example, as illustrated in FIG. 3, when the value of the SRS request bits set in the SRS request field in the DCI transmitted from the base station 20 is "001," the terminal 10 may assume that only the first aperiodic SRS resource set in the first cell among the plurality of cells is triggered. In the example of FIG. 3, the value of Y is 3. However, the value of Y is not limited to 3. The value of Y may be less than or equal to 2 or may be greater than 3.

### (Proposal 1-3)

If the base station 20 schedules multiple cells, the size of the SRS request field need not be extended. For example, the size of the SRS request field may be 2 bits (if SUL is not configured) or 3 bits (if SUL is configured) depending on whether SUL is configured. For example, a correspondence may be defined between a bit value set in the SRS request field and a combination of aperiodic SRS resource sets selected for respective CCs, so that, when a first CC and a second CC are scheduled by a single DCI, a combination of an aperiodic SRS resource set selected for the first CC and an aperiodic SRS resource set selected for the second CC can be specified. For example, such a correspondence may be predefined by a specification, or may be configured by a higher layer. In this case, the size of the SRS request field may be predetermined or configured by a higher layer, or the size of the SRS request field may be set to a maximum size or a minimum size of the size of the SRS request field for the first CC and the size of the SRS request field for the second CC.

### (Proposal 2)

If the base station 20 schedules multiple cells, an aperiodic SRS resource set may be specified by the SRS request field for one cell (which may be one or more cells) of the multiple cells. The terminal 10 may select the aperiodic SRS resource set specified by the SRS request field for the one cell of the plurality of cells. For example, suppose that, in the example illustrated in FIG. 2, PDSCH transmissions (or PUSCH transmissions) on CC#2 and CC#3 are scheduled for the terminal 10 by the DCI transmitted from the base station 20 through PDCCH of CC#1. In this case, by the value of the SRS request bit set in the SRS request field of the DCI transmitted from the base station 20 through PDCCH of CC#1, for example, the aperiodic SRS request set for CC#2 may be specified. In this case, the terminal 10 may select the aperiodic SRS resource set for the CC#2 based on the value of the SRS request bit set in the SRS request field

### (Proposal 2-1)

If the base station 20 schedules multiple cells, the SRS request field may be extended to X bits, for example. Here, X may be {3, 4, or 5} based on a maximum number of the sizes of the SRS request fields required for respective scheduled cells + (1 or 2) .

For example, if X is the maximum number of the sizes of the SRS request fields for respective scheduled cells +1, by the one bit in the SRS request field (e.g., 1 Most Significant Bit (MSB) or 1 Least Significant Bit (LSB)), one cell on which aperiodic SRS transmission is triggered may be specified for the terminal 10, and, in this case, the terminal 10 may assumed that aperiodic SRS transmission is not triggered for the other cells of the plurality of cells.

For example, if X is the maximum number of the sizes of the SRS request fields required for respective scheduled cells, by two bits of the SRS request field (e.g., 2MSB or 2LSB), a cell in which aperiodic SRS transmission is triggered may be specified for the terminal 10.

### (Proposal 2-2)

If the base station 20 schedules multiple cells, the size of the SRS request field need not be extended. For example, the size of the SRS request field may be 2 bits or 3 bits. For example, the size of the SRS request field may be defined based on a size of the SRS request field required for a specific scheduled cell.

### (Proposal 2-2-1)

In the above-described Proposal 2-2, the specific scheduled cell may be a cell provided with a smallest serving cell index among a plurality of scheduled cells.

### (Proposal 2-2-2)

In the above-described Proposal 2-2, the specific scheduled cell may be a cell provided with a maximum number of aperiodic SRS resource sets among a plurality of scheduled cells.

### (Proposal 2-2-3)

In the above-described Proposal 2-2, the specific scheduled cell may be determined by an RRC configuration.

In the above-described Proposal 2-2-1 through Proposal 2-2-3, the terminal 10 may assume that among the plurality of cells scheduled, aperiodic SRS transmission is not triggered for the cells other than the specified cell.

### (Proposal 2')

If the base station 20 schedules multiple cells, if one cell of the plurality of scheduled cells is a cell that performs scheduling (i.e., if the cell that performs scheduling schedules its own cell and the other cells by a single DCI), it may be possible to trigger aperiodic SRS transmission by the SRS request field, and it may be unable to trigger aperiodic SRS transmission by the SRS request field for the cells other than the cell that performs scheduling, among the plurality of scheduled cells.

### (Proposal 3)

If the base station 20 schedules a plurality of cells, the SRS request for the plurality of cells may not be performed. For example, if the base station 20 schedules multiple cells, the terminal 10 may assume that all the SRS request field is set to zero.

### (Proposal 3-1)

In the above-described Proposal 3, the terminal 10 may assume that the size of the SRS request field is 0 bit, and the terminal 10 may assume that, for each cell of the plurality of scheduled cells, aperiodic SRS transmission is not triggered.

### (Proposal 3-2)

In the above-described Proposal 3, the terminal 10 may assume that the size of the SRS request field is 2 bits or 3 bits, and, in this case, the terminal 10 may ignore the SRS request field and the terminal 10 may assume that, for each cell of the plurality of scheduled cells, aperiodic SRS transmission is not triggered.

### (Proposal 4)

If the base station 20 schedules a plurality of cells, it may possible to switch, by RRC signaling, whether the terminal 10 assumes an SRS request. For example, by RRC signaling, any of the above-described methods of Proposal 1 through Proposal 3 may be configured for the terminal 10.

### (Proposal 5)

If base station 20 schedules a plurality of cells, if numbers of aperiodic SRS resource sets are the same among the plurality of scheduled cells, and if aperiodic SRS transmissions with the same identifier (*aperiodicRSR-ResourceTrigger*) are supported in the plurality of scheduled cells is supported, the value indicated by the SRS request field may be commonly applied to the plurality of scheduled cells.

### (Proposal 6)

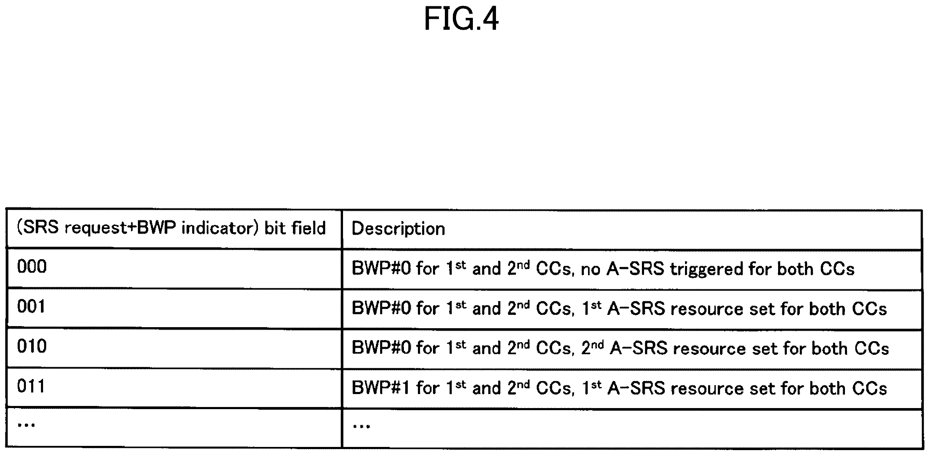

If the base station 20 schedules a plurality of cells, the SRS request field and another field may be jointly coded. For example, as illustrated in FIG. 4, the SRS request field and the BWP indicator field may be jointly coded. For example, as illustrated in FIG. 4, a correspondence may be defined among the (SRS request + BWP indicator) field, a BWP on the specified component carrier, the aperiodic SRS resource set in the specified component carrier. In this case, for example, the base station 20 may include a (SRS request + BWP indicator) bit field in the DCI to inform the terminal 10 of the (SRS request + BWP indicator) bits, and the terminal 10 receiving the (SRS request + BWP indicator) bits may activate the specified BWP on the specified component carrier and select the specified aperiodic SRS resource set in the specified component carrier based on the correspondence illustrated in FIG. 4.

Note that the above-described Proposal 1 through Proposal 6 may be applied to a CSI request field of DCI format 0_1. For example, suppose that, in the example illustrated in FIG. 2, PDSCH transmissions (or PUSCH transmissions) on CC#2 and CC#3 are scheduled for the terminal 10 by the DCI transmitted from the base station 20 through PDCCH of CC#1. Furthermore, suppose that SUL is not configured on CC#s and SUL is configured on CC#3. In this case, the CSI request field in the DCI may include a total of five bits, which are two bits for triggering aperiodic transmission of CSI report on CC#2 and three bits for triggering aperiodic transmission of CSI report on CC#3. The terminal 10 receiving the DCI through the PDCCH of CC#1 may perform aperiodic CSI report on CC#2 based on the value of the two bits for triggering aperiodic transmission of CSI report on CC#2 included in the CSI request field and may perform aperiodic transmission of CSI report on CC#3 based on the value of the three bits for triggering aperiodic transmission of CSI report on CC#3 included in the CSI request field. Furthermore, for example, the SRS request field in Proposals 1-2, 1-3 and 2-1 may be replaced with the CSI request field.

### (Device configuration)

Next, an example of a functional configuration of the terminal 10 and the base station 20 that execute the process operation described above is described. Each of the terminal 10 and the base station 20 is provided with all of the functions described in the embodiments. However, each of the terminal 10 and the base station 20 may include only a part of the functions described in the embodiments. The terminal 10 and the base station 20 may be collectively referred to as a communication device.

### <Terminal>

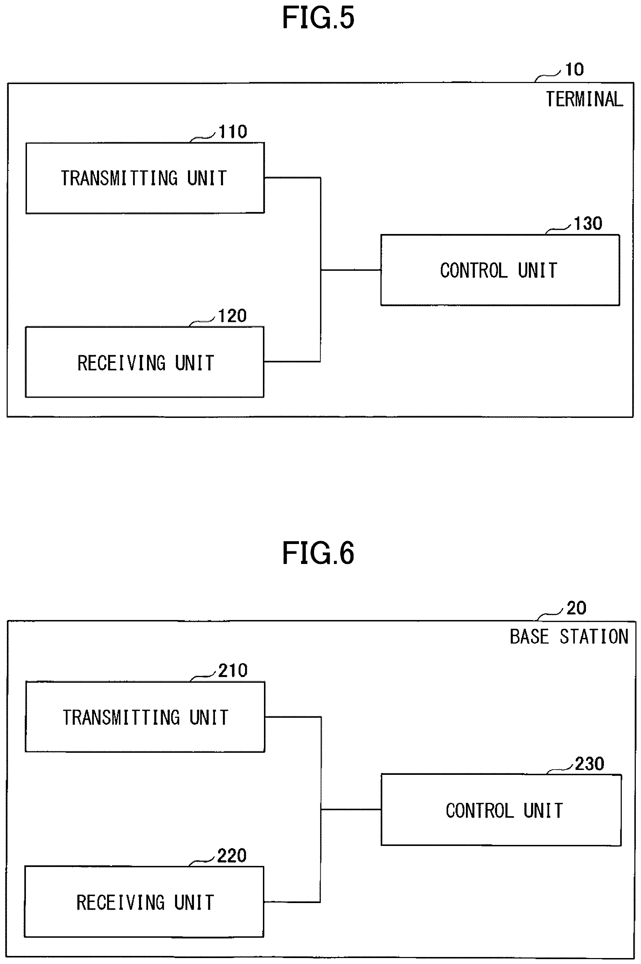

FIG. 5 is a diagram illustrating an example of a functional configuration of the terminal 10. As illustrated in FIG. 5, the terminal 10 includes a transmitting unit 110, a receiving unit 120, and a control unit 130. The functional configuration illustrated in FIG. 5 is merely one example. If the operation according to the present embodiment can be executed, functional divisions and names of functional units may be any divisions and names. Here, the transmitting unit 110 may be referred to as a transmitter and the receiving unit 120 may be referred to as a receiver.

The transmitting unit 110 creates a transmission from the transmission data and transmits the transmission signal through radio. The transmitting unit 110 is capable of forming one or more beams. The receiving unit 120 receives various types of signals through radio and obtains a higher layer signal from the received physical layer signal. The receiving unit 120 includes a measuring unit that measures a received signal and obtains received power, etc.

The control unit 130 controls the terminal 10. The function of the control unit 130 related to transmission may be included in the transmitting unit 110, and the function of the control unit 130 related to reception may be included in the receiving unit 120.

For example, the receiving unit 120 receives DCI including scheduling information from the base station 20 through PDCCH. The control unit 130 selects a BWP to be activated in each component carrier based on a value set in the SRS request field included in the DCI.

### <Base station 20>

FIG. 6 is a diagram illustrating an example of a functional configuration of the base station 20. As illustrated in FIG. 6, the base station 20 includes a transmitting unit 210, a receiving unit 220, and a control unit 230. The functional configuration illustrated in FIG. 6 is only one example. The function division and the names of the functional units may be any division and names, provided that the operation according to the embodiments can be executed. The transmitting unit 210 may be referred to as a transmitter, and the receiving unit 220 may be referred to as a receiver.

The transmitting unit 210 includes a function for generating a signal to be transmitted to the terminal 10 and transmitting the signal through radio. The receiving unit 220 includes a function for receiving various signals transmitted from the terminal 10 and obtaining, for example, information of a higher layer from the received signals. The receiving unit 220 includes a measuring unit that measures a received signal and obtains received power.

The control unit 230 controls the base station 20. The function of the control unit 230 related to transmission may be included in the transmitting unit 210, and the function of the control unit 230 related to reception may be included in the receiving unit 220.

For example, when a plurality of cells is to be scheduled, the control unit 230 generates an SRS request field including information for triggering aperiodic SRS transmission on each component carrier and includes the SRS request field in the DCI including the scheduling information. The transmitting unit 210 transmits the DCI generated by the control unit 230 through PDCCH.

### <Hardware Configuration>

The block diagrams (FIG. 5 to FIG. 6) used in the description of the above-described embodiments illustrate blocks in units of functions. These functional blocks (components) are implemented by any combination of hardware and/or software. Furthermore, the means for implementing each functional block is not particularly limited. That is, each functional block may be implemented by one device with a physical and/or logical combination of elements, or may be implemented by two or more devices while directly and/or indirectly (e.g., wired and/or wireless) connecting the two or more devices that are physically and/or logically separated.

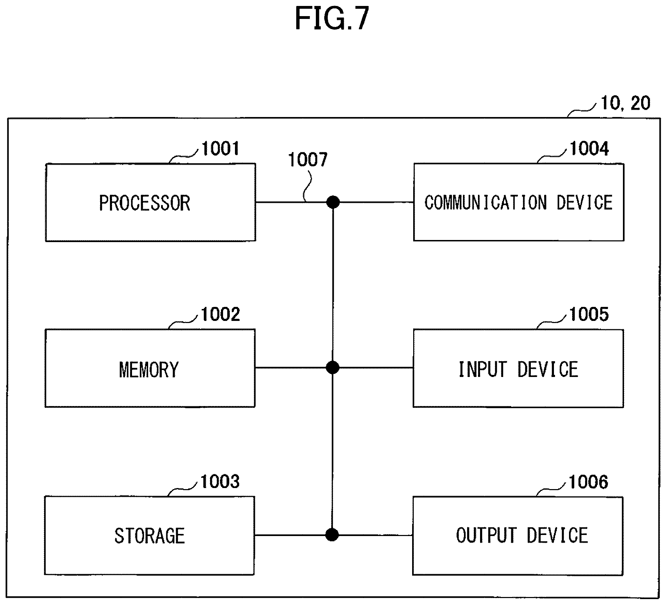

For example, each of the terminal 10 and the base station 20 according to one embodiment of the present invention may function as a computer performing the process according to this embodiments. FIG. 7 is a diagram illustrating an example of a hardware configuration of a terminal 10 and a base station 20 according to the embodiment. Each of the above-described terminal 10 and base station 20 may be physically configured as a computer device including a processor 1001, a memory 1002, a storage 1003, a communication device 1004, an input device 1005, an output device 1006, a bus 1007, or the like.

In the following description, the term "device" can be replaced with a circuit, a device, a unit, or the like. The hardware configuration of the terminal 10 and base station 20 may be configured to include one or more of the devices denoted by 1001-1006 in the figure, or may be configured without some devices.

Each function of the terminal 10 and the base station 20 is implemented by loading predetermined software (program) on hardware, such as the processor 1001 and the memory 1002, so that the processor 1001 performs computation and controls communication by the communication device 1004, and reading and/or writing of data in the memory 1002 and the storage 1003.

The processor 1001, for example, operates an operating system to control the entire computer. The processor 1001 may be configured with a central processing unit (CPU: Central Processing Unit) including an interface with a peripheral device, a control device, a processing device, a register, or the like.

Additionally, the processor 1001 reads a program (program code), a software module or data from the storage 1003 and/or the communication device 1004 to the memory 1002, and executes various processes according to these. As the program, a program is used which causes a computer to execute at least a part of the operations described in the above-described embodiment. For example, the transmitting unit 110, the receiving unit 120, and the control unit 130 of the terminal 10 illustrated in FIG. 5 may be implemented by a control program that is stored in the memory 1002 and operated by the processor 1001. For example, the transmitting unit 210, the receiving unit 220, and the control unit 230 of the base station 20 illustrated in FIG. 6 may be implemented by a control program stored in the memory 1002 and operated by the processor 1001. While the various processes described above are described as being executed in one processor 1001, they may be executed simultaneously or sequentially by two or more processors 1001. Processor 1001 may be implemented by one or more chips. The program may be transmitted from the network via a telecommunications line.

The memory 1002 is a computer readable storage medium, and, for example, the memory 1002 may be formed of at least one of a Read Only Memory (ROM), an Erasable Programmable ROM (EPROM), an Electrically Erasable Programmable ROM (EEPROM), a Random Access Memory (RAM). The memory 1002 may be referred to as a register, a cache, a main memory (main storage device), or the like. The memory 1002 may store a program (program code), a software module, or the like, which can be executed for implementing the process according to one embodiment of the present invention.

The storage 1003 is a computer readable storage medium and may be formed of, for example, at least one of an optical disk, such as a Compact Disc ROM (CD-ROM), a hard disk drive, a flexible disk, an optical magnetic disk (e.g., a compact disk, a digital versatile disk, a Blu-ray (registered trademark) disk), a smart card, a flash memory (e.g., a card, a stick, a key drive), a floppy (registered trademark) disk, a magnetic strip, or the like. The storage 1003 may be referred to as an auxiliary storage device. The above-described storage medium may be, for example, a database including memory 1002 and/or storage 1003, a server, or any other suitable medium.

The communication device 1004 is hardware (transmitting and receiving device) for performing communication between computers through a wired and/or wireless network, and is also referred to, for example, as a network device, a network controller, a network card, a communication module, or the like. For example, the transmitting unit 110 and the receiving unit 120 of the terminal 10 may be implemented by the communication device 1004. The transmitting unit 210 and the receiving unit 220 of the base station 20 may be implemented by the communication device 1004.

The input device 1005 is an input device (e.g., a keyboard, a mouse, a microphone, a switch, a button, or a sensor) that receives an external input. The output device 1006 is an output device (e.g., a display, speaker, or LED lamp) that performs output toward outside. The input device 1005 and the output device 1006 may be configured to be integrated (e.g., a touch panel).

Each device, such as processor 1001 and memory 1002, is also connected by the bus 1007 for communicating information. The bus 1007 may be formed of a single bus or may be formed of buses that differ among devices.

The terminal 10 and the base station 20 may each include hardware, such as a microprocessor, a digital signal processor (DSP), an Application Specific Integrated Circuit (ASIC), a Programmable Logic Device (PLD), and a Field Programmable Gate Array (FPGA), which may implement some or all of each functional block. For example, processor 1001 may be implemented by at least one of these hardware components.

### (Conclusion of the embodiments)

In this specification at least the following terminal and communication method are disclosed.

A terminal including a receiving unit that receives, through a first component carrier of a plurality of component carriers forming carrier aggregation, scheduling information for one or more second component carriers of the plurality of component carriers; and a control unit that configures, based on information for requesting sounding reference signal (SRS) transmission included in the scheduling information, SRS transmission on the one or more second component carriers.

According to the above-described configuration, the terminal can configure SRS transmission on a scheduled component carrier based on information for requesting SRS transmission included in the scheduling information.

The information for requesting SRS transmission may include information for requesting aperiodic SRS transmission on each component carrier of the one or more second component carriers.

According to the above-described configuration, the terminal can configure aperiodic SRS transmission on each component carrier base on the information for requesting SRS transmission included in the scheduling information.

The one or more second component carriers may include two component carriers, the information for requesting SRS transmission may include identification information for identifying one combination of all combinations of an aperiodic SRS resource set that can be configured for one component carrier of the two component carriers and an aperiodic SRS resource set that can be configured for the other component carrier of the two component carriers, and a bit size of the information for requesting SRS transmission may be based on a number of the all combinations.

According to the above-described configuration, when SRS transmission on each component carrier is configured based on the information for requesting SRS transmission included in the scheduling information, a number of bits of the information for requesting SRS transmission can be reduced.

At least one of a most significant bit or a least significant bit of a plurality of bits included in the information for requesting SRS transmission may be information for specifying one or more component carriers of the one or more second component carriers.

According to the above-described configuration, when SRS transmission is configured for a component carrier based on the information for requesting SRS transmission included in the scheduling information, a number of bits of the information for requesting SRS transmission can be reduced.

A communication method by a terminal, the method including a step of receiving, through a first component carrier of a plurality of component carriers forming carrier aggregation, scheduling information for one or more second component carriers of the plurality of component carriers; and a step of configuring, based on information for requesting sounding reference signal (SRS) transmission included in the scheduling information, SRS transmission on the one or more second component carriers.

According to the above-described configuration, the terminal can configure SRS transmission on a scheduled component carrier based on information for requesting SRS transmission included in the scheduling information.

### (Supplemental Embodiments)

While the embodiments of the present invention are described above, the disclosed invention is not limited to the embodiments, and those skilled in the art will appreciate various alterations, modifications, alternatives, substitutions, or the like. Descriptions are provided using specific numerical examples to facilitate understanding of the invention, but, unless as otherwise specified, these values are merely examples and any suitable value may be used. Classification of the items in the above descriptions is not essential to the present invention, and the items described in two or more items may be used in combination as needed, or the items described in one item may be applied (provided that there is no contradiction) to the items described in another item. The boundaries of functional units or processing units in the functional block diagram do not necessarily correspond to the boundaries of physical components. An operation by a plurality of functional units may be physically performed by one component or an operation by one functional unit may be physically executed by a plurality of components. For the processing procedures described in the embodiments, the order of processing may be changed, provided that there is no contradiction. For the convenience of the description of the process, the terminal 10 and the base station 20 are described using functional block diagrams, but such devices may be implemented in hardware, software, or a combination thereof. Software operated by a processor in accordance with embodiments of the present invention and software operated by a processor in accordance with embodiments of the present invention may be stored in a random access memory (RAM), a flash memory (RAM), a read-only memory (ROM), an EPROM, an EEPROM, a register, a hard disk (HDD), a removable disk, a CD-ROM, a database, a server, or any other suitable storage medium, respectively.

Notification of information is not limited to the aspects/embodiments described in this specification, and notification of information may be made by another method. For example, notification of information may be implemented by physical layer signaling (e.g., Downlink Control Information (DCI), or Uplink Control Information (UCI)), higher layer signaling (e.g., Radio Resource Control(RRC) signaling, Medium Access Control (MAC) signaling, broadcast information (Master Information Block (MIB), System Information Block (SIB)), or other signals or combinations thereof. RRC signaling may be referred to as an RRC message, for example, which may be an RRC connection setup message, an RRC connection reconfiguration (RRC Connection Reconfiguration) message, or the like.

The aspects/embodiments described in this specification may be applied to a system using Long Term Evolution (LTE), LTE-Advanced (LTE-A), SUPER 3G, IMT-Advanced, 4G, 5G, Future Radio Access (FRA), W-CDMA (Registered Trademark), GSM (Registered Trademark), CDMA2000, Ultra Mobile Broadband (UMB), IEEE 802.11 (Wi-Fi), IEEE 802.16 (WiMAX), IEEE 802.20, Ultra-WideBand (UWB), Bluetooth (Registered Trademark), or any other appropriate system, and/or a next generation system extended based on theses.

The processing procedures, sequences, flow charts, or the like of each aspect/embodiment described herein may be reordered, provided that there is no contradiction. For example, the methods described in this specification present elements of various steps in an exemplary order and are not limited to the particular order presented.

The particular operation described in this specification to be performed by base station 20 may be performed by an upper node in some cases. It is apparent that in a network consisting of one or more network nodes having base stations 20, various operations performed for communicating with terminal 10 may be performed by base stations 20 and/or other network nodes other than base stations 20 (e.g., MME or S-GW can be considered, however, the network node is not limited to these). The case is exemplified above in which there is one network node other than the base station 20. However, the network node other than the base station 20 may be a combination of multiple other network nodes (e.g., MME and S-GW).

The aspects/embodiments described in this specification may be used alone, may be used in combination, or may be switched during execution.

The terminal 10 may be referred to by one of ordinary skill in the art as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other suitable terms.

The base station 20 may be referred to by one of ordinary skill in the art as NodeB (NB), enhanced NodeB (eNB), base station, gNB, or some other suitable terms.

A bandwidth part (BWP: Bandwidth Part) (which may also be referred to as a partial bandwidth) may represent, in a certain carrier, a subset of consecutive common RB (common resource blocks) for a certain numerology. Here, the common RB may be specified by an index of an RB when a common reference point of the carrier is used as a reference. A PRB may be defined in a BWP, and may be numbered in the BWP.

The BWP may include a BWP for UL (UL BWP) and a BWP for DL (DL BWP). For a UE, one or more BWPs may be configured within one carrier.

At least one of the configured BWPs may be active, and the UE is may not assume that a predetermined signal/channel is communicated outside the active BWP. Note that "cell," "carrier," or the like in the present disclosure may be replaced with "BWP."

The terms "determine (determining)" and "decide (determining)" used in this specification may include various types of operations. For example, "determining" and "deciding" may include deeming that a result of calculating, computing, processing, deriving, investigating, looking up (e.g., search in a table, a database, or another data structure), or ascertaining is determined or decided. Furthermore, "determining" and "deciding" may include, for example, deeming that a result of receiving (e.g., reception of information), transmitting (e.g., transmission of information), input, output, or accessing (e.g., accessing data in memory) is determined or decided. Furthermore, "determining" and "deciding" may include deeming that a result of resolving, selecting, choosing, establishing, or comparing is determined or decided. Namely, "determining" and "deciding" may include deeming that some operation is determined or decided.

The phrase "based on" used in this specification does not imply "based solely on" unless otherwise specified. In other words, "based on" means both "based solely on" and "at least based on. "

As long as the terms, such as "include (include)," "including (including)," and variants thereof, are used in this specification or in the claims, these terms are intended to be inclusive, similar to the term "comprising." Furthermore, it is intended that the term "or" as used in this specification or in the claims is not an exclusive OR.

Throughout the present disclosure, if an article is added by translation, such as "a," "an," and "the" in English, these articles may include a plurality of things unless as otherwise indicated by the context clearly.

The present invention is described in detail above. It is apparent to those skilled in the art that the present invention is not limited to the embodiments described in this specification. The present invention can be implemented as modifications and alterations without departing from the gist and scope of the present invention as defined by the claims. Accordingly, the descriptions in this specification is intended for illustrative purposes and does not have any restrictive meaning to the present invention.

### LIST OF REFERENCE SYMBOLS

- 10: terminal
- 110: transmitting unit
- 120: receiving unit
- 130: control unit
- 20: base station
- 210: transmitting unit
- 220: receiving unit
- 230: control unit
- 1001: processor
- 1002: memory
- 1003: storage
- 1004: communication device
- 1005: input device
- 1006: output device

## Claims

1. A terminal comprising:
a receiving unit that receives, through a first component carrier of a plurality of component carriers forming carrier aggregation, scheduling information for one or more second component carriers of the plurality of component carriers; and
a control unit that configures, based on information for requesting sounding reference signal (SRS) transmission included in the scheduling information, SRS transmission on the one or more second component carriers.

2. The terminal according to claim 1, wherein the information for requesting SRS transmission includes information for requesting aperiodic SRS transmission on each component carrier of the one or more second component carriers.

3. The terminal according to claim 1, wherein the one or more second component carriers include two component carriers,
wherein the information for requesting SRS transmission includes identification information for identifying one combination of all combinations of an aperiodic SRS resource set that can be configured for one component carrier of the two component carriers and an aperiodic SRS resource set that can be configured for the other component carrier of the two component carriers, and
wherein a bit size of the information for requesting SRS transmission is based on a number of the all combinations.

4. The terminal according to claim 1, wherein at least one of a most significant bit or a least significant bit of a plurality of bits included in the information for requesting SRS transmission is information for specifying one or more component carriers of the one or more second component carriers.

5. A communication method by a terminal, the method comprising:
receiving, through a first component carrier of a plurality of component carriers forming carrier aggregation, scheduling information for one or more second component carriers of the plurality of component carriers; and
configuring, based on information for requesting sounding reference signal (SRS) transmission included in the scheduling information, SRS transmission on the one or more second component carriers.
